# EUROPEAN PATENT APPLICATION

(11) **EP 1 052 516 A2**
(43) Date of publication of application: **15.11.2000**
(21) Application number: 00304000.3
(22) Date of filing: 12.05.2000
(51) Int. Cl.: G01P 5/22, G01F 1/708, G01F 1/712

(54) **Measuring the flow of particles in a fluid**

(30) Priority: 14.05.1999 GB 9911161; 09.11.1999 GB 9926399
(71) Applicant: Hyde, John, Scawthorpe, Doncaster DN5 7UP (GB)
(72) Inventor: Hyde, John, Scawthorpe, Doncaster DN5 7UP (GB)
(74) Representative: Loven, Keith James

(57) **Abstract**

A method of measuring the velocity of particles in a fluid flow comprises:
directing at the fluid flow a pair of light beams spaced apart by a predetermined distance, the beams carrying respectively first and second modulations and being directed in a direction generally transverse to the direction of flow;
detecting at a common detector means (3) light reflected from or scattered by particles passing through the two beams to produce a detector signal;
separating said detector signal into a first signal carrying the first modulation and a second signal carrying the second modulation;
comparing the pattern of variations in amplitude in the first and second signals to establish a correlation between the patterns and measuring the temporal displacement in the correlation; and
calculating from the temporal displacement and the known distance between the beams the velocity of the particles in the fluid flow.

## Description

### Field of the Invention

This invention relates to a method of and apparatus for measuring the velocity of particles in a fluid flow and, in a preferred embodiment of the invention, their mass flow rate.

### Background to the Invention

Dust is a major pollutant in the industrial world. With the exception of gaseous fuels, dust or particulates are produced from virtually every combustion process. In many applications the dust can be potentially hazardous to health. Waste incineration is a good example, as this is often carried out in built up residential inner-city areas.

It has been understood for some time that this dust must be reduced. Once a reduction method has been employed, it must be monitored to ensure that it is functioning correctly. A wide range of methods have been developed to measure dust emissions, from crude opacity systems to laser back scatter systems, which are capable of measuring extremely low dust concentrations.

The environment and the health of the population are affected by the concentration of dust in the air. As the dust emissions are diluted by the atmospheric air, the total amount of dust dumped into the atmosphere is what matters, not the concentration in the stack.

A one kilogram static dust burden in the stack will not affect the environment because it is simply not going anywhere. However, an emission of one kilogram per minute is of great concern. It is the flow of dust into the atmosphere that causes the problem. Existing methods of concentration measurement are generally incapable of responding to the velocity at which the dust is dumped, so cannot report the amount of dust emitted.

It is possible to use a second instrument to measure the velocity of the flue gas, and again a number of technologies exist for providing this measurement. Unfortunately, these are either expensive (ultrasonic time of flight) or unreliable (turbine in gas stream). In addition, pollution monitoring is a cost that the manufacturer or energy provider must bear. This, in general, means that the costs of monitoring are carefully controlled.

Examples of prior art disclosures of devices which measure particle velocity in a fluid flow are set out below.

US-A-4251733 discloses a device which uses a beam splitter to form two parallel laser beams through which a particle can pass sequentially. A detector sees the scattered radiation from each beam as the particle passes through, enabling the velocity to be measured. The intensity gives an indication of particle size. However, while this is acceptable for individual particles, it does not permit measurement of particle concentration where single particles are not separated out, since it is not possible to distinguish signals in the detector.

EP-A-0311176 discloses an optical flow meter which uses forward scatter imaged on a multi-element photodiode array. A statistical analysis is undertaken of the detector output to deduce flow velocity. The device has not capability of determining concentration of particles in the flow.

US-A-5383024 discloses a laser doppler velocimeter measuring steam particle size. A comparison of detector waveforms with known patterns for known particle sizes is used to deduce particle size in the sample. Concentration is not measured.

US-A-4986659 discloses a device which measures velocity and particle size for discrete particles passing through split laser beams by measuring the relative phase and amplitude of the resultant signals.

### Summary of the Invention

The invention provides a method of measuring the velocity of particles in a fluid flow, the method comprising:
directing at the fluid flow a pair of light beams spaced apart by a predetermined distance, the beams carrying respectively first and second modulations and being directed in a direction generally transverse to the direction of flow;
detecting at a common detector means light reflected from or scattered by particles passing through the two beams to produce a detector signal;
separating said detector signal into a first signal carrying the first modulation and a second signal carrying the second modulation;
comparing the pattern of variations in amplitude in the first and second signals to establish a correlation between the patterns and measuring the temporal displacement in the correlation; and
calculating from the temporal displacement and the known distance between the beams the velocity of the particles in the fluid flow.

The detectors may be arranged to detect forward or back scatter of light from the fluid flow space. Preferably, the light beams are directed normally to the direction of fluid flow.

Where the fluid flow is a liquid flow, and the surface velocity of the flow is to be measured, the beams of light may be produced by light emitting diodes (LEDs), although the use of lasers may give greater accuracy. For applications where the velocity of suspended solids in a gas flow is to be measured, it will be necessary to use lasers.

Where lasers are used to produce the beams of light, it may be advantageous in some circumstances to use a beam which diverges in one plane to increase the sensitivity by increasing the likelihood that a particle will pass through the beam. This is especially important where relatively low concentrations of solids are to be measured.

A preferred method in accordance with the invention also comprises calculating the mean amplitude of the detected signal, and deriving from said mean the concentration of solid particles in the gas flow. It will be seen that the combination of concentration and velocity will enable the quantity of solids being emitted in a gas flow to be monitored continuously, permitting, for example, warnings to be given when the emissions exceed, or approach, a legally-allowed limit.

The invention also provides apparatus for measuring the velocity of particles in a fluid flow, comprising;
first and second light sources for directing spaced apart beams of light obliquely at the fluid flow and means associated with each light source for providing respective first and second modulations of the light output by the first and second light sources;
a common detector means arranged to receive light from both light sources reflected back from particles in the fluid flow and to produce a detector output signal proportionate to the light received thereby; and
processing means connected to the detector means, the processing means being arranged to:
(a) separate the detector signal into a first signal carrying the first modulation and a second signal carrying the second modulation;
(b) compare the patter of variations in the amplitude in the first and second signals to establish a correlation between the patterns and to measure the temporal displacement in the correlation; and
(c) calculate from the temporal displacement and the distance between the beams the velocity of the particles in the fluid flow.

Where the particles are all in a single plane, i.e. a moving solid or liquid surface, for example a flow of slurry in an open channel, it is possible to use a focussed image of the laser beam reflected from the surface, permitting the use of two detectors and so obviating the need for modulation of the two beams. Accordingly, the invention also provides a method of measuring the velocity of a moving liquid or solid surface, the method comprising:
directing at the surface a pair of light beams spaced apart by a predetermined distance;
detecting at a respective detector means light reflected from by the surface from each of the beams to produce first and second detector signals;
comparing the pattern of variations in amplitude in the first and second signals to establish a correlation between the patterns and measuring the temporal displacement in the correlation; and
calculating from the temporal displacement and the known distance between the beams the velocity of the surface.

This aspect of the invention also provides apparatus for measuring the velocity of a moving liquid or solid surface, comprising:
first and second light sources for directing spaced apart beams of light obliquely at the surface;
first and second detector means for respectively detecting light reflected from by the surface from each of the beams to produce first and second detector signals; and
processing means connected to the detector means, the processing means being arranged to:
compare the pattern of variations in amplitude in the first and second signals to establish a correlation between the patterns and measuring the temporal displacement in the correlation; and
calculate from the temporal displacement and the known distance between the beams the velocity of the surface.

Using the method and apparatus of the invention in measuring the characteristics of dust-bearing gas flows, it has been found that it is possible to measure velocity and concentration down to as little as 25mg m⁻³, with the potential for accurate measurement of even lower concentrations.

### Brief Description of the Drawings

In the drawings, which illustrate exemplary embodiments of the invention:
Figure 1 is a diagrammatic representation of the apparatus of the invention;
Figure 2 is a graph illustrating the method of velocity measurement of the invention;
Figure 3 is a block diagram of the main components of the apparatus of the invention.

### Detailed Description of the Illustrated Embodiment

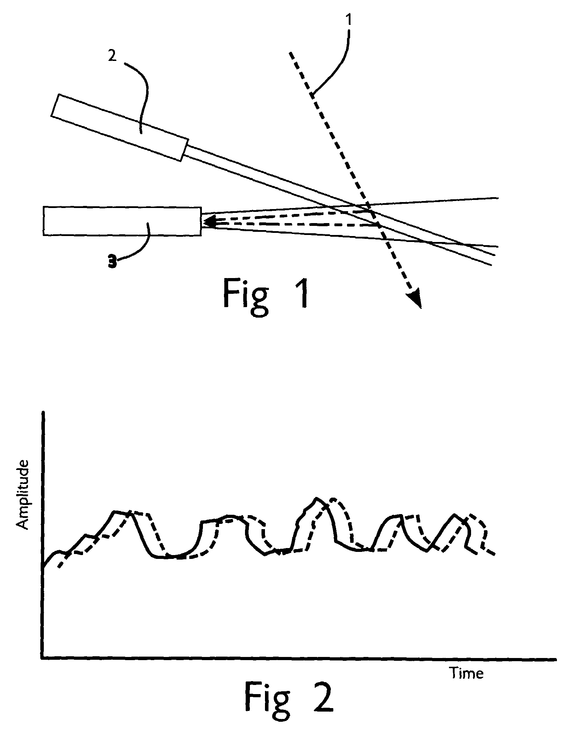

Referring first to Figure 1, the direction of flow of dust-carrying gas is represented by the broken line 1. A laser device 2 directs two parallel laser beams obliquely into the gas flow, and a detector 3 is positioned so as to receive light reflected back from solid dust particles carried by the flow. So that the signals generated by reflection of the two laser beams can be discriminated in the detector output, the laser beams are each modulated with a separate modulating signal. It will be seen that a dust particle travelling in the direction of the broken line 1 first passes through the first laser beam, reflecting light back towards the detector 3, and then a short time afterwards, dependent on the gas flow velocity, passes through the second laser beam reflecting some of its light back towards the detector. The chain-dotted lines represent the light reflected by the particle from each beam back to the detector.

Figure 2 represents the random amplitude signal output by the detector as a result of particles of dust carried by the gas flow each reflecting light back to the detector from the two laser beams in turn. The solid line represents light from the first laser beam and the broken line represents light from the second laser beam. Since the distance between the two beams is short, the amplitude pattern generated by the particles is likely to be essentially identical. By identifying the patterns in the signals arising from the two beams and measuring their temporal separation, the velocity of the particles between the beams can be calculated. The mean amplitude of the signals enables the concentration of dust particles in the gas flow to be deduced, and this, combined with the velocity, enables the mass flow rate to be estimated.

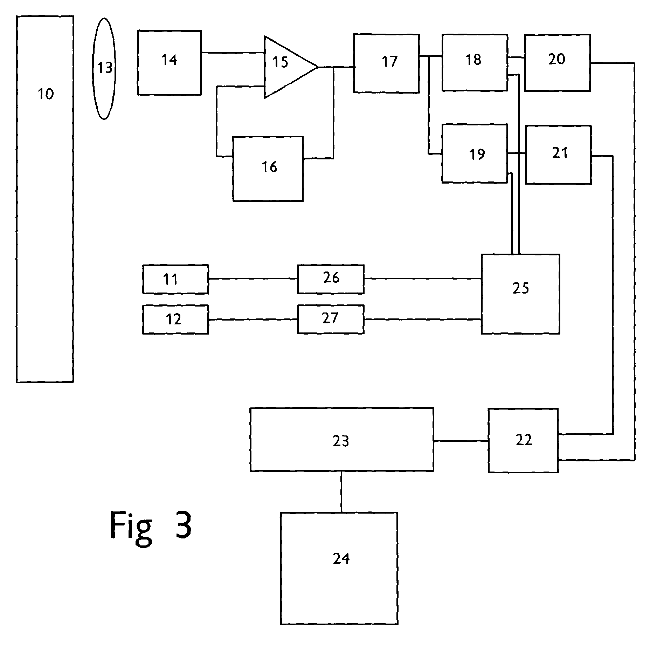

Figure 3 illustrates the essential components of the apparatus in accordance with one embodiment of the invention. The measurement plane or volume - the liquid surface or gas flow path being measured - is represented by the block 10. First and second lasers 11 and 12 direct parallel beams into the gas flow, and light reflected back from dust particles in the flow is focussed by a lens 13 on to a high speed photodetector 14. The output from the detector passes to a high gain, low noise, wide bandwidth current-to-voltage converter 15 which is provided with a low pass filter 16 for the removal of signals arising from ambient light especially fluorescent lighting.

The output from this stage is the composite of noise plus the first and second signals. A band pass filter 17 allows both signals through while rejecting noise outside the band. It will be understood that this approach necessitates keeping the modulating frequencies relatively close together.

The two signals must then be separated into two channels. This is done using two very high speed precision synchronous rectifiers 18 and 19, operating at modulating frequencies 1 and 2 respectively. The maximum frequency has been set to 200kHz in this embodiment by the gain band width product of the photodiode amplifier. Increasing the power of the light source or having very high dust levels would allow this frequency to be increased, thus allowing higher velocities to be measured. The above criterion sets the frequency of the high frequency channel. Since the operation of the synchronous rectifier is such that maximum signal rejection occurs at half or twice the modulation frequency, the second modulation frequency will be exactly half that of the first, i.e. 100kHz. The output of the two rectifiers 18 and 19 now consists of the first and second signals with a DC component representing the amplitude of the AC signals.

In order to measure the output of these two rectifiers, the average is taken. However, if this is not done correctly, the system response time will suffer. The average is therefore achieved by the use of eight-pole Bessel filters 20 and 21 with a cut-off frequency of 40kHz. Both filters are of the same design and are thus matched. The resulting outputs represent the magnitude of the two modulated signals with minimal cross talk and a fast response time of around 25µs.

A two-channel analogue-to-digital converter 22 converts the signals to digital form for subsequent processing to measure the time difference between the two channels. The digital signal processing stage 23 samples the data stream simultaneously on both channels for a fixed period. Cross correlation is then performed on the two data streams, repeatedly shifting one set of data in time relative to the other and performing the cross-correlation function until the function gives a peak value. The peak indicates the time displacement between the signals, and since the distance between the laser beams is known, the velocity of the particles can be calculated and displayed via a display system 24.

A timing generator 25 supplies first and second clock signals of first phase to laser modulators 26 and 27, and of second phase to the first and second synchronous rectifiers 18 and 19.

The invention may additionally be applied to the determination of particle size distribution. A small particle travelling through the laser beam produces a relatively short pulse, while a large particle travelling at the same velocity through the same measurement zone will produce a pulse of longer duration. The result is essentially the same as that of a single particle passing through the same measurement zone at different velocities. However, as the velocity has been determined, as hereinbefore defined, the pulse length can be normalised to a constant velocity. A spectral analysis may therefore be performed on the received data stream by using fast Fourier transforms to yield a representation of the noise signal as a frequency domain. This representation can be normalised against velocity so that the shape of the resultant graph gives a picture of the particle size distribution, independent of the velocity.

It is possible to simplify the signal processing considerably so that the sensitivity of the system is much lower, when measuring the velocity of solid surfaces travelling at 90 degrees to the measuring instrument. Provided some surface texture is present, the surface velocity of relatively smooth objects can be measured. This may then permit measurement of surface velocities of such industrial items as conveyor belts, rotating machinery, or process materials. Measurement of hazardous and/or erosive materials could be achieved in a reliable, non-contact, maintenance-free manner.

## Claims

1. A method of measuring the velocity of particles in a fluid flow, the method comprising:
directing at the fluid flow a pair of light beams spaced apart by a predetermined distance, the beams carrying respectively first and second modulations and being directed in a direction generally transverse to the direction of flow;
detecting at a common detector means light reflected from or scattered by particles passing through the two beams to produce a detector signal;
separating said detector signal into a first signal carrying the first modulation and a second signal carrying the second modulation;
comparing the pattern of variations in amplitude in the first and second signals to establish a correlation between the patterns and measuring the temporal displacement in the correlation; and
calculating from the temporal displacement and the known distance between the beams the velocity of the particles in the fluid flow.

2. A method according to Claim 1, wherein the fluid flow is a liquid flow, and the surface velocity of the flow is to be measured, comprising using light emitting diodes to produce the light beams.

3. A method according to Claim 1, wherein lasers are used to produce the beams of light.

4. A method according to Claim 3, wherein each laser is arranged to produce a beam which diverges in one plane.

5. A method according to any preceding claim, comprising calculating the mean amplitude of the detected signal, and deriving from said mean the concentration of solid particles in the gas flow.

6. Apparatus for measuring the velocity of particles in a fluid flow, comprising;
first and second light sources for directing spaced apart beams of light obliquely at the fluid flow and means associated with each light source for providing respective first and second modulations of the light output by the first and second light sources;
a common detector means arranged to receive light from both light sources scattered by or reflected back from particles in the fluid flow and to produce a detector output signal proportionate to the light received thereby; and
processing means connected to the detector means, the processing means being arranged to:
(a) separate the detector signal into a first signal carrying the first modulation and a second signal carrying the second modulation;
(b) compare the patter of variations in the amplitude in the first and second signals to establish a correlation between the patterns and to measure the temporal displacement in the correlation; and
(c) calculate from the temporal displacement and the distance between the beams the velocity of the particles in the fluid flow.

7. Apparatus according to Claim 6, wherein each light source is a laser.

8. Apparatus according to Claim 6 or 7, wherein the processing means is also arranged to calculate the mean amplitude of the detected signal, and to derive from said mean the concentration of solid particles in the gas flow.

9. A method of measuring the velocity of a moving liquid or solid surface, the method comprising:
directing at the surface a pair of light beams spaced apart by a predetermined distance;
detecting at a respective detector means light reflected from by the surface from each of the beams to produce first and second detector signals;
comparing the pattern of variations in amplitude in the first and second signals to establish a correlation between the patterns and measuring the temporal displacement in the correlation; and
calculating from the temporal displacement and the known distance between the beams the velocity of the surface.

10. Apparatus for measuring the velocity of a moving liquid or solid surface, comprising:
first and second light sources for directing spaced apart beams of light obliquely at the surface;
first and second detector means for respectively detecting light reflected from by the surface from each of the beams to produce first and second detector signals; and
processing means connected to the detector means, the processing means being arranged to:
compare the pattern of variations in amplitude in the first and second signals to establish a correlation between the patterns and measuring the temporal displacement in the correlation; and
calculate from the temporal displacement and the known distance between the beams the velocity of the surface.
